# EUROPÄISCHE PATENTSCHRIFT

(11) **EP 0 791 519 B1**
(45) Veröffentlichungstag und Bekanntmachung des Hinweises auf die Patenterteilung: **08.03.2000**
(21) Anmeldenummer: 96102938.6
(22) Anmeldetag: 28.02.1996
(51) Int. Cl.: B62B 3/14, B62B 3/12

(54) **Schubgepäckwagen**
Luggage cart
Chariot à bagages

(30) Priorität: 20.02.1996 DE 29602974 U
(43) Veröffentlichungstag der Anmeldung: 27.08.1997
(73) Patentinhaber: EXPRESSO DEUTSCHLAND TRANSPORTGERÄTE GmbH, D-34123 Kassel (DE)
(72) Erfinder: Kratzenberg, Wolfgang, D-34270 Schauenburg (DE); Stein, Siegfried, D-34246 Vellmar (DE)
(74) Vertreter: Schön, Theodor, Patent- und Zivilingenieur

(56) Entgegenhaltungen:
- DE-A- 4 315 399
- DE-U- 8 804 327
- DE-U- 29 512 113
- US-A- 3 112 934

## Beschreibung

Die Erfindung bezieht sich auf einen Schubgepäckwagen, insbesondere mit gleichgestalteten Wagen zu einem Wagenpulk ineinanderschiebbarer Schubgepäckwagen zur Bereithaltung auf Bahnhöfen oder Flugplätzen oder dergl. Haltepunkten von Massenverkehrsmitteln, mit einem starren, wenigstens in Wagenlängsrichtung eine entgegen der Vorwärtsfahrtrichtung geneigt angeordnete Gepäcktragfläche begrenzenden Lasttragrahmen, der vorderendig wenigstens über eine um eine vertikale Achse schwenkbare Lenkrolle und hinterendig über zwei um starre Achsen drehbare Bockrollen gegen den Boden abgestützt ist und mit einem von aufragenden Holmen getragenen und an diesen schwenkbar angeschlossenen, im wesentlichen die Gesamte Wagenbreite überspannenden Schiebebügel sowie einer mittels des schwenkbar an die aufragenden Holme angeschlossenen Schiebebügels lösbaren, auf die hinteren Bockrollen wirkenden Bremseinrichtung, wobei das Chassis des Wagens aus wenigstens zwei räumlich gestalteten und mit Anschlußaufnahmen versehener Knotenformteilen und einer Anzahl von Hohlprofilmaterialzuschnitten gebildet ist und die Hohlprofilmaterialabschnitte und die Anschlußaufnahmen der Knotenformteile formschlüssig ineinandergreifen sowie über lösbare Befestigungsmittel in ihrer gegenseitigen Eingriffslage gesichert sind.

Derartige Schubgepäckwagen werden in unterschiedlichen Ausgestaltungsformen in großer Stückzahl an Haltepunkten von Massenverkehrsmitteln bereitgehalten, um den ankommenden und abgehenden Reisenden den Transport ihres gelegentlich großen und schweren Gepäckes vom Massen- zum individuellen Transportmittel bzw. umgekehrt zu erleichtern. Die bekannten Ausgestaltungformen solcher Schubgepäckwagen zeichnen sich in grundsätzlicher Weise durch einen U-förmigen, in einer horizontalen Ebene im wesentlichen in der Höhe der Rollenachsen des Wagens angeordneten und entgegen der Vorwärtsfahrtrichtung nach hinten offenen Chassisrahmen und an diesen angeschlossene, aufragende und einen Schiebebügel tragende Holme aus, wobei die hinteren Bockrollen sowie eine vordere Lenkrolle gleichfalls an den Chassisrahmen angeschlossen sind. Die Lasttragfläche dieser bekannten Schubgepckwagen ist dabei meist aus an den U-förmigen Chassisrahmen angeschlossenen Auflagerstäben gebildet, wobei sich eine erste Ausgestaltungsform dadurch auszeichnet, daß die Auflagerstäbe in der Ebene des Chassisrahmens ausgerichtet sind, während sich eine zweite, abgewandelte Ausgestaltungsform dadurch auszeichnet, daß die die Lasttragfläche bildenden Auflagerstäbe auf den Chassisrahmen aufgesetzt und in einer von vorne nach hinten abfallend geneigten Ebene ausgerichtet oberhalb des U-förmigen Chassisrahmens angeordnet sind. Gemeinsam ist jedoch beiden Ausgestaltungsformen, daß die Lasttragstäbe mittels Schweißung mit dem Lasttragrahmen verbunden werden müssen. Bei einer weiteren bekannten Ausgestaltungsform von Schubgepäckwagen ist auf einen U-förmigen, in einer horizontalen Ebene angeordneten Chassisrahmen eine aus einem eigenen Rahmen mit darin angeordneten Auflagerstäben gebildete Lasttrageinrichtung aufgesetzt, wobei aber ebenfalls sowohl die Auflagerstäbe mit dem Rahmen der Lasttrageinrichtung als auch diese selbst mit dem Chassisrahmen mittels Schweißung verbunden sind. Gemeinsam ist daher allen bekannten Ausgestaltungen von Schubgepäckwagen, daß sie aus einer großen Vielzahl von untereinander nur mittels Schweißung verbindbarer Einzelteile bestehen, was im übrigen auch auf den Anschluß sowohl der Bockrollen als auch der Lenkrolle an den Chassisrahmen zutrifft.

Für Einkaufswagen, deren gebrauchsmäßige Belastung mit derjenigen von Schubgepäckwagen nicht vergleichbar ist, ist es zwar, z.B durch das DE-U-88 04 327, bereits bekannt, das Fahrwerk eines Wagens durch einfache auf entsprechende Zapfen von Knotenformteilen aufsteckbare und über quergerichtete Schraubenbolzen oder dergl. an diesen befestigbare Rundrohrabschnitte zu bilden. Für den Aufbau des Wagenchassis von Schubgepäckwagen sind derartige Bauweisen jedoch zunächst aus Gründen der bei Schubgepäckwagen erforderlichen, wesentlich höheren mechanischen Festigkeit nicht geeignet. Zumal aus einem solchen Aufbau eines Wagenchassis mit integrierter, tiefliegender Lasttragfläche darüber hinaus auch noch erhebliche Verletzungsgefahren für die Benutzer und Beschädigungsgefahren für das Gepäck resultieren würden.

Auch ein einfaches Verhaken der Rahmenrohre eines Wagenchassis mit zugeordneten Zapfen an Knotenelementen, wie es aus der US-A-3 112 934 bekannt ist führt auf keinen Fall zu einer für Schubgepäckwagen ausreichenden Stabilität eines Wagenchassis.

Der Erfindung liegt die Aufgabe zugrunde einen mit seinesgleichen ineinanderschiebbaren Schubgepäckwagen der eingangs beschriebenen Bauart dahingehend zu verbessern, daß er, ohne eine Beeinträchtigung der Gebrauchsfähigkeit oder Stabilität in Kauf nehmen zu müssen, in unterschiedlichen Ausstattungsformen aus einer geringstmöglichen Anzahl von einfachen und einheitlichen sowie ohne Zuhilfenahme von Vorrichtungen zusammenbaubaren und einfach austauschbaren Einzelteilen besteht, wobei zudem die Ausbildung der Verbindungen so gestaltet ist, daß der Wagen in seiner optischen Erscheinungsform, insbesondere im Hinblick auf eine verbesserte Transparenz seiner Funktionsweise optimiert ist. Schließlich ist es bei alledem weiteres hervorragendes Ziel der Erfindung das Gesamtgewicht des Wagens zu verringern.

Diese Aufgabe wird bei einem Schubgepäckwagen der eingangs bezeichneten Bauart erfindungsgemäß im Wesentlichen dadurch gelöst, daß ein eine vordere Lenkrollenaufhängung, einen Lasttragrahmen, einen hinteren Gepäckanlagebügel, zwei aufragende Holme für den Anschluß des Schiebebügels sowie Anschlüsse für die Bockrollenlagerung umfassendes Wagenchassis aus insgesamt drei räumlich gestalteten Knotenformteilen und fünf Hohlprofilmaterialabschnitten gebildet ist, wobei das die Holme und/oder Bügel des Wagenchassis bildende Hohlprofilmaterial einen im Wesentlichen kreisrunden Profilquerschnitt aufweisenden Außenumfang und eine einen quadratischen Profilquerschnitt aufweisende lichte Weite besitzt und daß die an den Knotenformteilen ausgebildeten zapfenförmigen Anschlußaufnahmen eine der lichten Weite des Profilquerschnittes des Hohlprofilmaterials entsprechende quadratische Querschnittsform aufweisen sowie mit, wenigstens im Bereich ihrer Stirnseite eine der Querschnittsform des Außenumfanges des Hohlprofilmaterials entsprechende Querschnittsform aufweisenden Sockeln ausgestattet sind. Der Einsatz räumlich gestalteter Knotenformteile gestattet, von deren Einzelausbildung unabhängig, eine Reduzierung der für den Zusammenbau eines Schubgepäckwagens erforderlichen Einzelteile und damit auch eine Verringerung der einzeln zu montierenden Verbindungsstellen. Insbesondere ergibt sich aus dem Einsatz räumlich gestalteter Knotenformteile die Möglichkeit sämtliche Holme und Bügel des Wagenchassis aus einfachen Hohlprofilmaterialzuschnitten zu bilden und die diesen zugeordneten Anschlußaufnahmen an den Knotenformteilen als einfache Steckverbindungen auszubilden und zwar in einer solchen Weise, daß die Verbindung jeweils in einfachster Weise, ohne das Erfordernis besonderer Vorrichtungen, erfolgen kann, z.B. durch Verspannung oder bei geeigneter Materialauswahl gegebenenfalls auch durch Schrumpfen. Dabei kann die gegenseitige Verspannung der einzelnen Bestandteile des Wagenchassis mittels durch Schrauben anziehbarer Spanneinrichtungen erfolgen. Die bevorzugte Verwendung als Spritzgußteil ausgebildeter, räumlich gestalteter Knotenformteile ermöglicht es darüber hinaus für die Ausbildung der Rahmen-und/oder Aufbauteile des Wagens Hohlprofile beliebiger und gegebenenfalls unterschiedlicher Querschnittsform einzusetzen, da die zugehörigen Aschlußaufnahmen an den Knotenformteilen ohne jeden Mehraufwand in beliebigen Querschnittsformen hergestellt werden können, so daß es hinsichtlich des erforderlichen Herstellungs- und auch Montageaufwandes letztlich gleichgültig ist, ob für die einzelnen Rahmen- oder Aufbauteile des Wagenchassis untereinander gleiche oder unterschiedliche Profilquerschnittsformen eingesetzt werden. Insbesondere kann die Verwendung von Hohlprofilen aus Leichtmetall, wie Aluminium, vorgesehen sein, was neben einer Verringerung des Eigengewichtes des Wagens, zugleich auch noch eine verbesserte Benutzerfreundlichkeit mit sich bringt.

Im Verfolg einer besonders vorteilhaften Lösung der Aufgabenstellung ist im weiteren vorgesehen, daß der Lasttragrahmen zwei L-förmig gebogene Hohlprofilmaterialzuschnitte umfaßt, die vorderendig mit Anschlußaufnahmen eines räumlich gestalteten, zugleich die Lenkrollenaufhängung beinhaltenden Knotenformteiles und hinterendig mit der Anschlußaufnahme jeweils eines räumlich gestalteten und mit Mitteln für den Anschluß der Bockrollenlagerung ausgestatteten Knotenformteiles im formschlüssigen Eingriff stehen.
Eine vorteilhafte Maßnahme der Ausgestaltung des Chassis des Wagens besteht ferner darin, daß das die Holme und/oder Bügel des Wagenchassis bildende Hohlprofilmaterial an seinem Außenumfang wenigstens eine, vorzugsweise zwei und einander gegenüberliegend angeordnete Längsnuten für die Aufnahme von Leisten aus einem Gummi-oder Kunststoffmaterial aufweist.

In bevorzugter Einzelausgestaltung ist vorgesehen, daß das den Lasttragrahmen mit der Lenkrollenaufhängung verbindende, räumlich gestaltete Knotenformteil in der Stirnansicht eine im Wesentlichen T-förmige Gestalt aufweist, derart, daß an einen untenliegend angeordneten Querträger zentral ein aufragender Mittelbock angegliedert ist, wobei an den freien außenliegenden Enden des Querträgers des Knotenformteiles einerseits Aufnahmen zum Anschluß von Kippsicherungs-Hilfsrollen und andererseits Aschlußaufnahmen für die Längsholme des Lasttragrahmens angeordnet bzw. ausgebildet sind.

Schubgepäckwagen der hier in Rede stehenden Bauart sind üblicherweise mit innerhalb der vom Lasttragrahmen umgrenzten Lasttragfläche angeordneten Lastauflagerstäben ausgestattet, um auch kleinere Gepäckstücke sicher auf der Lasttragfläche abstellen und halten zu können. Hierzu ist erfindungsgemäß ferner vorgesehen, daß im oberen Bereich des Mittelbockes des des den Lasttragrahmen mit der Lenkrollenaufhängung verbindenden Knotenformteiles hülsenförmige Aufnahmen zur Halterung von gegen die Anordnung eines vorderen Ladeflächenbegrenzungsbügels austauschbaren, innerhalb der Lasttragfläche des Wagens anzuordnenden Lastauflagerstäben ausgebildet sind. Selbstverständlich kann aber auch vorgesehen sein kann, daß gegebenenfalls weitere Aufnahmen zur gleichzeitigen Anordnung von Lastauflagerstäben und eines Ladeflächenbegrenzungsbügels ausgebildet bzw. angeordnet sind.
Der hintere Gebäckanlagebügel besteht zweckmäßigerweise aus einem einteiligen zu einer nach unten offenen U-förmige Grundrißform gebogenen Hohlprofilmaterialzuschnitt und ist in einem Abstand zu seinem Anschluß an die hinteren Knotenformteile gegen die aufragenden Holme abgestützt ist, wobei die Abstützung durch formschlüssig mit den längsverlaufenden Längsnuten im Hohlprofilmaterial im Eingriff stehende Stützteile gebildet ist und wobei die Stützteile zugleich mit quergerichteten Anschlußaufnahmen für die gegenebenenfalls vorhandenen Lastauflagerstäbe des Wagenchassis ausgestattet sind.

Der im Austausch gegen innerhalb des Lasttragrahmens anzuordnende Lastauflagerstäbe an das Knotenformteil anschließbare vordere Ladeflächenbegrenzungsbügel ist durch einen einteiligen im Wesentlichen U-förmig verformten und mit angeformten seitlichen Ausladungen versehenen Hohlprofilmaterialabschnitt gebildet wobei die dem vorderen Lastflächenbegrenzungsbügel zugeordneten Aufnahmen im Mittelbock des den Lasttragrahmen mit der Lenkrollenaufhängung verbindenden Knotenformteiles hülsenförmig ausgebildet sind.

Um eine gewisse Stoßsicherung beim Anstoßen insbesondere des beladenen Schubgepäckwagens an ein Hindernis vorzusehen ist das den Lasttragrahmen mit der Lenkrollenaufhängung verbindende Knotenformteil im Bereich des Querträgers mit einem in Vorwärtsfahrtrichtung nach vorne vorspringenden Stoßabweiserteil ausgestattet, wobei das Stoßabweiserteil zweckmäßigerweise zusätzlich mit insbesondere nutartigen Aufnahmen zur Anordnung von Leisten oder sonstigen Teilen aus stoßdämpfendem elastischen Material ausgestattet ist.

In weiterer Einzelausgestaltung eines erfindungsgemäßen Schubgepäckwagens sind die den Lasttragrahmen mit den Bockrollen und den den Schiebebügel tragenden, aufragenden Holmen verbindenden, räumlich gestalteten Knotenformteile im wesentlichen L-förmig gestaltet, wobei an den im wesentlichen vertikal angeordneten Schenkel der L-Form eine zapfenförmige Anschlußaufnahme für einen den einen Längsholm des Lasttragrahmens bildenden Hohlprofilmaterialabschnitt und an dem im wesentlichen horizontal ausgerichteten Schenkel der L-Form mit einem Abstand zueinander und im wesentlichen vertikal ausgerichtet eine erste zapfenförmige Anschlußaufnahme für den hinteren Gepäckanlagebügel und eine zweite zapfenförmige Anschlußaufnahme für einen der beiden aufragenden, den Schiebebügel tragenden Holme angeordnet sind, und dessen beide Schenkel innenseitig durch eine bogenförmig gekrümmte Anlagefläche für den Anschluß der Bockrollenlagerung verbunden sind. Die dem aufragenden Holm zugeordnete zapgenförmige Anschlußaufnahme ist dabei mit einer mittigen Durchgangsauysnehmung für ein Bremsbetätigungsmittel versehen.
Die an die den Lasttragrahmen mit dem hinteren Gepäckanlagebügel und den aufragenden, den Schiebebügel tragenden, Holmen verbindenden, räumlich gestalteten Knotenformteile anschließbare Bockrollenlagerung ist zweckmäßigerweise als vormontierbare Baueinheit ausgebildet und umfaßt neben der Lagerachse für die Bockrollen diesen gegenüber mit einem geringen Abstand vorlaufend, ihrerseits um feste Achsen rotierende Hilfsrollen sowie eine nach Art von Schutzblechen ausgebildete Abdeckung der Bockrollen und ein auf den Reifen der Bockrolle wirkendes Bremselement.

Um ein sicheres Überwinden der am Ausgang von Rolltreppen üblicherweise vorhandenen Schwellen oder Stufenabsätzen zu gewährleisten ist nach einem weiteren Merkmal der Erfindung weiterhin vorgesehen, daß an den den Lasttragrahmen mit den Bockrollen und den den Schiebebügel tragenden, aufragenden Holmen verbindenden, räumlich gestalteten Knotenformteilen besondere Einrichtungen vorhanden bzw. angeordnet sind, welche beim Auflaufen der während der Fahrt mit der Rolltreppe gebremsten Bockrollen auf die am Ausgang von Rolltreppen üblicherweise vorhandene Schwelle oder den Stufenabsatz entweder die auf die Bockrolle wirkende Bremse löst oder aber die gebremste Bockrolle mit ihrer durch die sich weiterbewegende Trittstufe der Rolltreppe gebildeten Aufstandsfläche außer Eingriff bringt, so daß der Wagen ungebremst über die Schwelle oder den Stufenabsatz laufen kann und damit seitens des Benutzers keine Aufmerksamkeit bezüglich der Notwendigkeit zum augenblicklichen manuellen Lösen der Bremse beim Auslaufen des Wagens aus der Rolltreppe erforderlich ist. In einer einfachen aber wirkungsvollen Weise wird eine solche Einrichtung dadurch verwirklicht, daß an den die Bockrollen mit den den Schiebebügel tragenden Holmen verbindenden, räumlich gestalteten Knotenformteilen den Bockrollen gegenüber mit einem geringen Abstand vorlaufend, ihrerseits um feste Achsen rotierend Hilfsrollen angeordnet sind, wobei zur Verwirklichung eines hinreichenden Durchmessers der Hilfsrollen weiter vorgesehen sein kann, daß die Hilfsrollen den Bockrollen gegenüber spur-und höhenversetzt versetzt angeordnet sind.

Die gegebenenfalls innerhalb des Lasttragrahmens vorgesehenen Lastauflagerstäbe sind, bestehen zweckmäßigerweise aus Längenabschnitten eines Rundrohrmaterials geringeren Durchmessers und sind einerseits über in dessen oberen Bereich ausgebildete hülsenförmige Aufnahmen am Mittelbock des den Lasttragrahmen mit der Lenkrollenaufhängung verbindenden Knotenformteiles und andererseits über zapfenförmig gestaltete Aufnahmen mit den Stützteilen verbunden.

Zudem sind die Lastauflagerstäbe in an sich bekannter Weise so um verschiedene, insbesondere aufeinander senkrecht stehende Achsen abgewinkelt, sowohl in der Draufsicht als auch in der Seitenansicht eine etwa L-förmige Gestalt besitzen.

Hinsichtlich der Ausbildung der Knotenformteile sie die Erfindung vor, daß mindestens das den Lasttragrahmen mit der Lenkrollenaufhängung verbindende, räumlich gestaltete Knotenformteil als einheitliches einteiliges Formteil, insbesondere Spritzgußformteil, ausgebildet ist, wobei als Material sowohl Leichtmetall als auch Kunststoffmaterial in Betracht kommt.

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine Seitenansicht eine in einer ersten Weise ausgestatteten, erfindungsgemäßen Schubgepäckwagens;
- Figur 2: eine schaubildliche Darstellung des Wagenchassis des Schubgepäckwagens nach Figur 1;
- Figur 3: eine schaubildliche Darstellung eines in einer zweiten Weise ausgestatteten Schubgepäckwagens;
- Figur 4: eine schaubildliche Darstellung des Wagenchassis des Schubgepäckwagens nach Figur 3
- Figur 5: eine Explosionsdarstellung abgewandelten Gestaltungform des Chassis des Schubgepäckwagens nach Figur 1 oder 3;
- Figur 6: eine schaubildliche Darstellung eines Hohlprofilmaterialabschnittes.

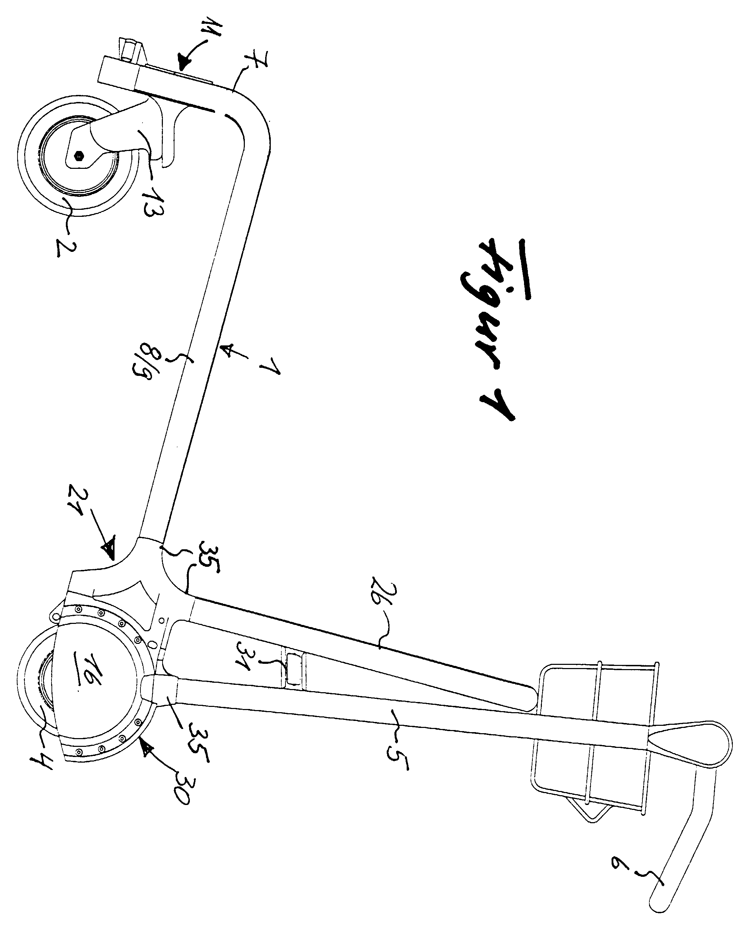

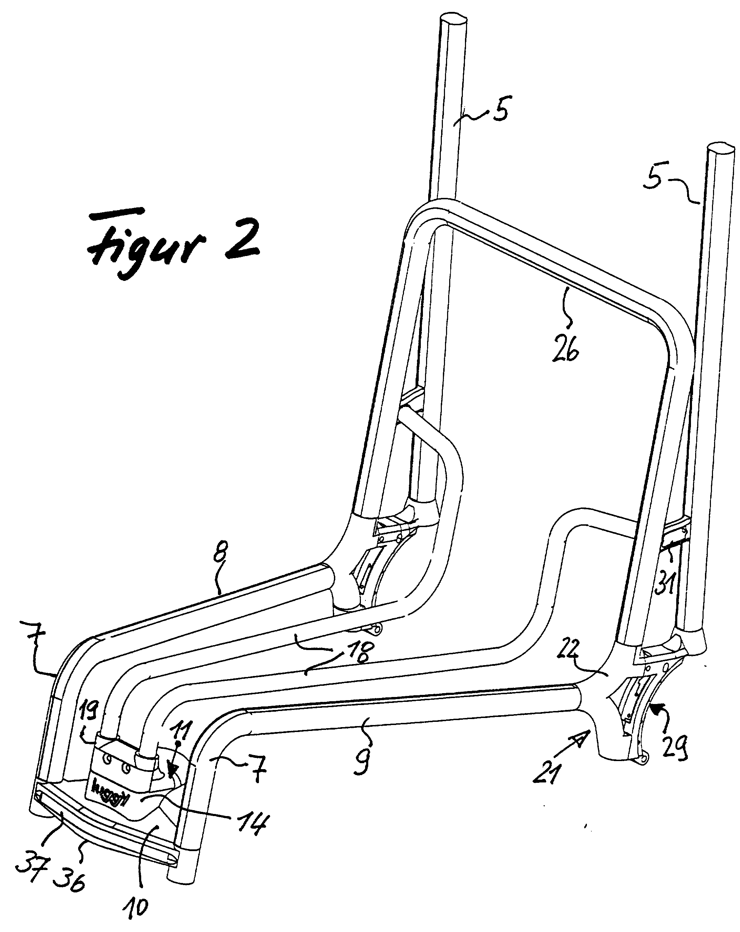

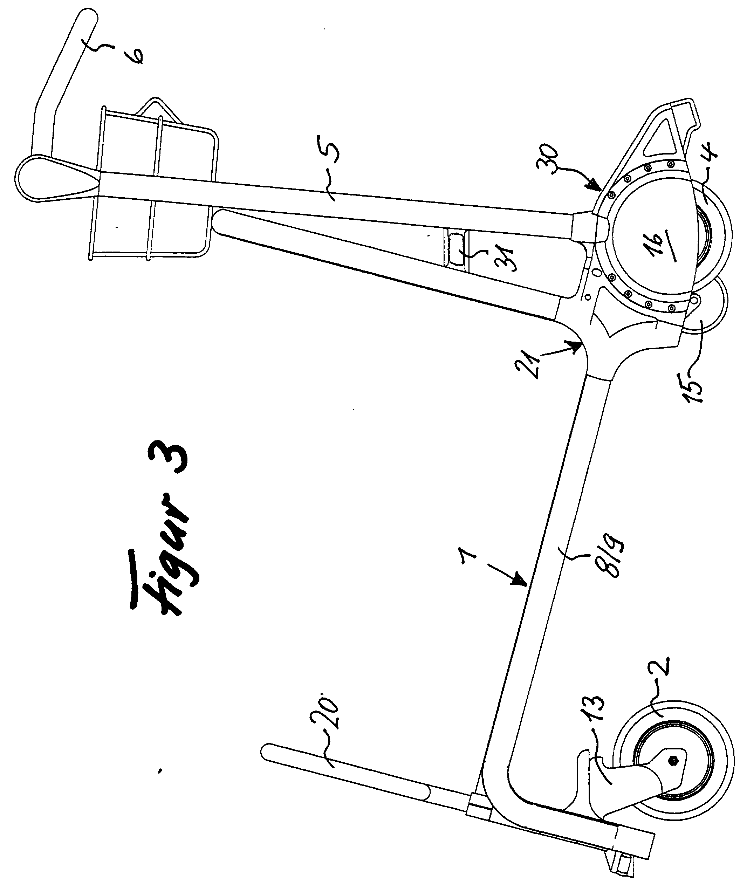

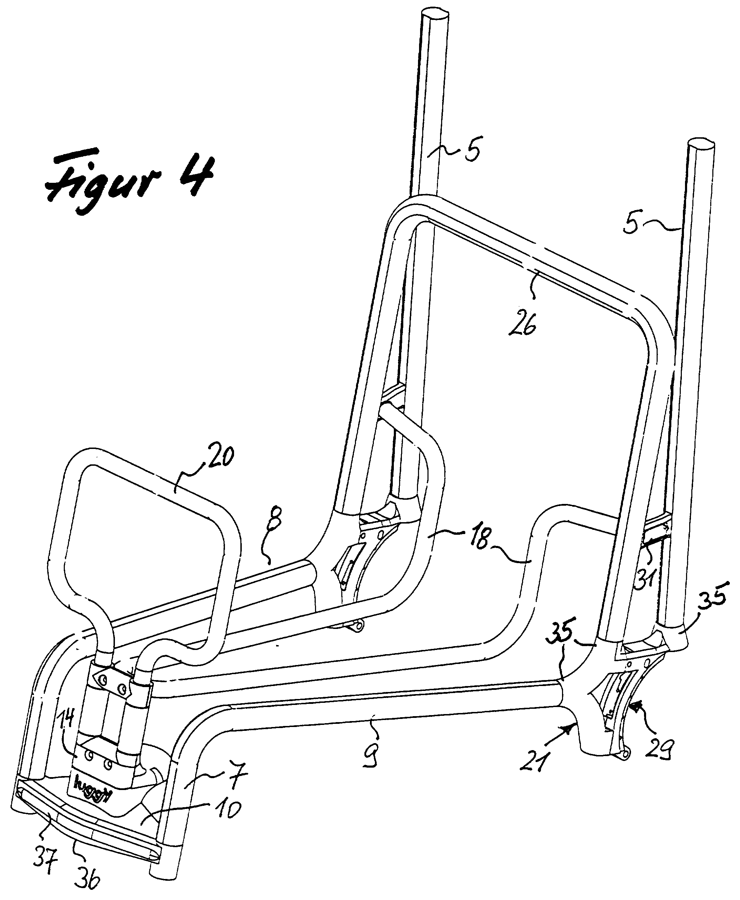

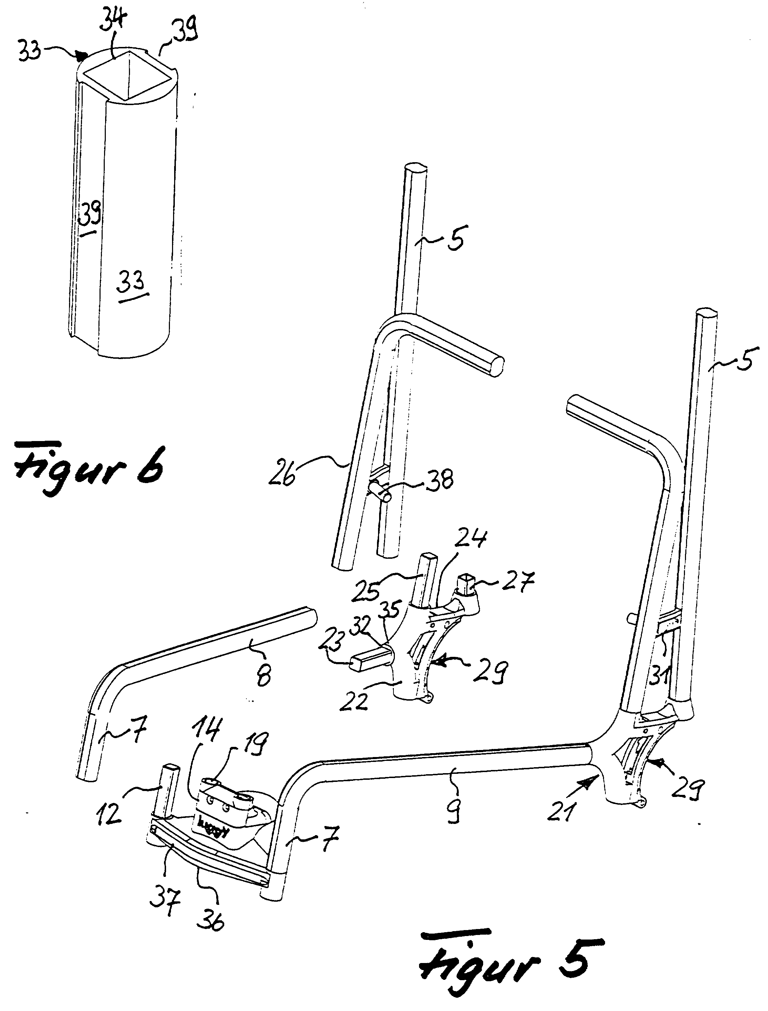

Der in der Zeichnung dargestellte, insbesondere mit gleichgestalteten Wagen zu einem Wagenpulk ineinanderschiebbare Schubgepäckwagen besteht in beiden dargestellten Ausstattungsformen im Wesentlichen aus einem starren, wenigstens in Wagenlängsrichtung eine Gepäcktragfläche begrenzenden Lasttragrahmen 1, der vorderendig über eine um eine vertikale Achse schwenkbare Lenkrolle 2 und hinterendig über zwei um starre Achsen 3 drehbare Bockrollen 4 gegen den Boden abgestützt ist. Ferner ist der Schubgepäckwagen mit einem von aufragenden Holmen 5 getragenen und an diesen schwenkbar angeschlossenen, im wesentlichen die gesamte Wagenbreite überspannenden Schiebebügel 6 sowie einer mittels des schwenkbar an die aufragenden Holme 5 angeschlossenen Schiebebügels 6 lösbaren, auf die hinteren Bockrollen wirkenden, in der Zeichnung im Einzelnen nicht dargestellten Bremseinrichtung ausgestattet.
Sämtliche Holme 5, 8, 9 und Bügel 20, 26 des Wagenchassis bestehen aus einem Hohlprofilmaterial, welches, wie insbesondere aus der Darstellung der Figur 6 ersichtlich, einen einen im Wesentlichen kreisrunden Profilquerschnitt aufweisenden Außenumfang 33 und eine einen quadratischen Profilquerschnitt aufweisende lichte Weite 34. Die an den Knotenformteilen 11, 21 ausgebildeten zapfenförmigen Anschlußaufnahmen 12, 17, 23, 25, 38 besitzen eine der lichten Weite 34 des Profilquerschnittes des Hohlprofilmaterials entsprechende quadratische Querschnittsform und sind mit, wenigstens im Bereich ihrer Stirnseite 32 eine der Querschnittsform des Außenumfanges des Hohlprofilmaterials entsprechende Querschnittsform aufweisenden Sockeln 35 ausgestattet. Das die Holme und/oder Bügel des Wagenchassis bildende Hohlprofilmaterial ist ferner an seinem Außenumfang 33 mit zwei und einander gegenüberliegend angeordneten Längsnuten 39 für die Aufnahme von in der Zeichnung nicht besonders dargestellten Leisten aus einem Gummi-oder Kunststoffmaterial versehen.
Der Lasttragrahmen 1 besteht in allen gezeigten Ausführungsbeispielen aus zwei jeweils im wesentlichen L-förmig abgewinkelten Längsholmen 8 und 9, die mit ihren nach unten abgewinkelten Formschenkeln 7 mit an den freien Enden eines Querträgers 10 eines den Lasttragrahmen 1 mit der Lenkrollenaufhängung verbindenden, räumlich gestalteten Knotenformteiles 11 angeordneten zapfenförmig gestalteten Anschlußaufnahmen 12 im formschlüssigen Eingriff stehen. In ihrer Eingriffslage mit den Anschlußaufnahmen 12 sind die Längsholme 8 und 9 durch in der Zeichnung im Einzelnen nicht gezeigte Schrauben gesichert. Das die Längsholme 8 und 9 des Lasttragrahmens 1 mit der Lenkrollenaufhängung 13 verbindende, räumlich gestaltete Knotenformteil 11 weist in der Stirnansicht eine im Wesentlichen T-förmige Gestalt auf, wobei an den untenliegend angeordneten, horizintal ausgerichteten Querträger 10 zentral ein aufragender Mittelbock 14 angegliedert ist. Innerhalb der vom Lasttragrahmen 1 umgrenzten Lasttragfläche sind bei allen dargestellten Schubgepäckwagen im wesentlichen in Wagenlängsrichtung ausgerichtet angeordnete und jeweils aus einem Rundrohrmaterialzuschnitt gebildete Lastauflagerstäbe 18 vorhanden, deren vorderendiger Befestigung im oberen Bereich des Mittelbockes 14 des den Lasttragrahmen 1 mit der Lenkrollenaufhängung 13 verbindenden Knotenformteiles 11 ausgebildete bzw. angeordnete hülsenartige Anschlußaufnahmen 19 zugeordnet sind. Gemäß der Darstellung der Figuren 1 und 2 sind die Lastauflagerstäbe 18 im Austausch gegen einen Ladeflächenbegrenzugsbügel 20 in den hülsenartigen Anschlußaufnahmen 19 aufgenommen und befestigt. Bei der in den Figuren 3 und 4 gezeigten Ausstattungsform sind den Lastauflagerstäben 18 zusätzliche, am Mittelbockes 14 des den Lasttragrahmen 1 mit der Lenkrollenaufhängung 13 verbindenden Knotenformteiles 11 ausgebildete zapfenförmige Anschlußaufnahmen 17 zugeordnet. Der im Ausführungsbeispiel nach Figur 3 und 4 gezeigte Ladeflächenbegrenzungsbügel 20 kann aber auch im Austausch gegen Lastauflagerstäbe 18 an den Mittelbock 14 des Knotenformteiles 11 angeschlossen sein.
Die Längsholme 8 und 9 des Lasttragrahmens 1 mit den Bockrollen 4 und den den Schiebebügel 6 tragenden, aufragenden Holmen 5 verbindende, räumlich gestaltete Knotenformteile 21 sind im wesentlichen L-förmig gestaltet, wobei an den im wesentlichen vertikal angeordneten Schenkel 22 der L-Form eine zapfenförmige Anschlußaufnahme 23 für einen den einen Längsholm 8 bzw. 9 des Lasttragrahmens bildenden Hohlprofilmaterialabschnitt und an dem im wesentlichen horizontal ausgerichteten Schenkel 24 der L-Form mit einem Abstand zueinander und im wesentlichen vertikal ausgerichtete eine erste zapfenförmige Anschlußaufnahme 25 für den hinteren Gepäckanlagebügel 26 und eine zweite zapfenförmige Anschlußaufnahme 27 für einen der beiden aufragenden, den Schiebebügel 6 tragenden Holme 5 angeordnet sind, und dessen beide Schenkel 22 und 24 innenseitig durch eine bogenförmig gekrümmte Anlagefläche 29 für den Anschluß der Bockrollenlagerung 30 verbunden sind. Die dem aufragenden Holm 5 zugeordnete zapfenförmige Anschlußaufnahme 27 ist dabei mit einer mittigen Durchgangsausnehmung 28 für ein Bremsbetätigungsmittel versehen.
Die an die den Lasttragrahmen mit dem hinteren Gepäckanlagebügel 26 und den aufragenden, den Schiebebügel 6 tragenden, Holmen 5 verbindenden, räumlich gestalteten Knotenformteile 21 anschließbare Bockrollenlagerung 30 ist zweckmäßigerweise als vormontierbare Baueinheit ausgebildet und umfaßt neben der Lagerachse 3 für die Bockrollen 4 diesen gegenüber mit einem geringen Abstand vorlaufend, ihrerseits um feste Achsen rotierende Hilfsrollen 15 sowie eine nach Art von Schutzblechen ausgebildete Abdeckung 16 der Bockrollen 4 und ein auf den Reifen der Bockrolle wirkendes Bremselement.
Der hintere Gepäckanlagebügel 26 besteht bei den in den Figuren 1 bis 4 dargestellen Ausführungsformen aus einem einteiligen Hohlprofilmaterialzuschnitt und weist eine nach unten offene U-förmige Grundrißform auf. Der Gepäckanlagebügel ist in einem Abstand zu seinem Anschluß an die hinteren Knotenformteile 21 gegen die aufragenden Holme 5 abgestützt, wobei die Abstützung durch formschlüssig mit den längsverlaufenden Längsnuten 37 im Hohlprofilmaterial im Eingriff stehende Stützteile 31 gebildet ist und wobei die Stützteile 31 zugleich mit quergerichteten Anschlußaufnahmen 38 für die innerhalb des Lasttragrahmens 1 angeordneten Lastauflagerstäbe 18 ausgestattet sind. Gemäß der Darstellung in Figur 5 kann der hintere Gepäckanlagebügel 26 aber auch aus zwei im wesentlichen L-förmigen Bügelteilen gebildet sein.
Um eine gewisse Stoßdämpfung beim Anstoßen insbesondere des beladenen Schubgepäckwagens an ein Hindernis sicher zu stellen, ist das den Lasttragrahmen 1 mit der Lenkrollenaufhängung 13 verbindende Knotenformteil 11 im Bereich seines untenliegend angeordneten Querträgers 10 mit einem in Vorwärtsfahrtrichtung nach vorne vorspringenden Stoßabweiserteil 36 ausgestattet, welches durch eine nach vorne vorspringende Ausgestaltung des Querträgers 10 gebildet und mit einer nutartigen Aufnahme 37 zur Anordnung von im Einzelnen nicht dargestellten Leisten und/oder sonstigen Teilen aus einem stoßdämpfendem elastischen Material ausgestattet ist.
Aus allen Darstellungen des Ausführungsbeispieles ist weiterhin ersichtlich, daß sowohl das die Lasttragrahmens 1 mit der Lenkrollenaufhängung 13 verbindende, räumlich gestaltete Knotenformteil 11 als auch die die Längsholme 8 und 9 des Lasttragrahmens 1 mit den Bockrollen 4 und den den Schiebebügel 6 tragenden, aufragenden Holmen 5 verbindenden, räumlich gestalteten Knotenformteile 21 durch einheitliche, insbesondere Spritzgußformteile gebildet sind.

### Bezugszeichenliste:

- 1: Lasttragrahmen
- 2: Lenkrolle
- 3: starre Achsen
- 4: Bockrollen
- 5: aufragende Holme
- 6: Schiebebügel
- 7: Formschenkel der Längsholme
- 8: Längsholm
- 9: Längsholm
- 10: Querträger
- 11: Knotenformteil
- 12: zapfenförmige Anschlußaufnahme
- 13: Lenkrollenaufhängung
- 14: Mittelbock
- 15: Hilfsrollen
- 16: Abdeckung
- 17: zapfenförmige Anschlußaufnahmen
- 18: Lastauflagerstäbe
- 19: hülsenförmige Anschlußaufnahmen
- 20: Ladeflächenbegrenzungsbügel
- 21: Knotenformteile
- 22: Schenkel-Knotenformteil
- 23: zapfenförmige Anschlußaufnahme
- 24: Schenkel-Knotenformteil
- 25: zapfenförmige Anschlußaufnahme
- 26: Gepäckanlagebügel
- 27: zapfenförmige Anschlußaufnahme
- 28: Durchgangsausnehmung
- 29: Anlagefläche
- 30: Bockrollenlagerung
- 31: Stützteile
- 32: Stirnseite
- 33: Außenumfang (Profil)
- 34: lichte Weite (Profil)
- 35: Sockel
- 36: Stoßabweiserteil
- 37: nutartige Aufnahme
- 38: Anschlußaufnahme
- 39: Längsnuten

## Patentansprüche

1. Schubgepäckwagen, insbesondere mit gleichgestalteten Wagen zu einem Wagenpulk ineinanderschiebbarer Schubgepäckwagen zur Bereithaltung auf Bahnhöfen oder Flugplätzen oder dergl. Haltepunkten von Massenverkehrsmitteln, mit einem starren, wenigstens in Wagenlängsrichtung eine entgegen der Vorwärtsfahrtrichtung geneigt angeordnete Gepäcktragfläche begrenzenden Lasttragrahmen (1), der vorderendig wenigstens über eine um eine vertikale Achse schwenkbare Lenkrolle (2) und hinterendig über zwei um starre Achsen (3) drehbare Bockrollen (4) gegen den Boden abgestützt ist und mit einem von aufragenden Holmen (5) getragenen und an diesen schwenkbar angeschlossenen, im wesentlichen die Gesamte Wagenbreite überspannenden Schiebebügel (6) sowie einer mittels des schwenkbar an die aufragenden Holme (5) angeschlossenen Schiebebügels (6) lösbaren, auf die hinteren Bockrollen (4) wirkenden Bremseinrichtung, wobei das Chassis des Wagens aus wenigstens zwei räumlich gestalteten und mit Anschlußaufnahmen (12,23,25,27) versehener Knotenformteilen (11,21) und einer Anzahl von Hohlprofilmaterialzuschnitten gebildet ist und die Hohlprofilmaterialabschnitte und die Anschlußaufnahmen (12,23,25,27) der Knotenformteile (11,21) formschlüssig ineinandergreifen sowie über lösbare Befestigungsmittel in ihrer gegenseitigen Eingriffslage gesichert sind,
dadurch gekennzeichnet,
daß ein eine vordere Lenkrollenaufhängung (13), einen Lasttragrahmen (1), einen hinteren Gepäckanlagebügel (26), zwei aufragende Holme (5) für den Anschluß des Schiebebügels (6) sowie Anschlüsse für die Bockrollenlagerung (30) umfassendes Wagenchassis aus insgesamt drei räumlich gestalteten Knotenformteilen (11,21) und fünf Hohlprofilmaterialabschnitten gebildet ist, wobei das die Holme (5,8.9) und/oder Bügel (20, 26) des Wagenchassis bildende Hohlprofilmaterial einen im Wesentlichen kreisrunden Profilquerschnitt aufweisenden Außenumfang und eine einen quadratischen Profilquerschnitt aufweisende lichte Weite (34) besitzt und daß die an den Knotenformteilen (11,21) ausgebildeten zapfenförmigen Anschlußaufnahmen (12,23,25,27) eine der lichten Weite (34) des Profilquerschnittes des Hohlprofilmaterials entsprechende quadratische Querschnittsform aufweisen sowie mit, wenigstens im Bereich ihrer Stirnseite eine der Querschnittsform des Außenumfanges (33) des Hohlprofilmaterials entsprechende Querschnittsform aufweisenden Sockeln (35) ausgestattet sind.

2. Schubgepäckwagen nach Anspruch 1, dadurch gekennzeichnet, daß der Lasttragrahmen (1) aus zwei L-förmig gebogenen Hohlprofilmaterialzuschnitten besteht, die vorderendig mit Anschlußaufnahmen (12) eines räumlich gestalteten, zugleich die Lenkrollenaufhängung (13) beinhaltenden Knotenformteiles (11) und hinterendig mit der Anschlußaufnahme jeweils eines räumlich gestalteten und mit Mitteln für den Anschluß der Bockrollenlagerung (30) ausgestatteten Knotenformteiles (21) im formschlüssigen Eingriff stehen.

3. Schubgepäckwagen nach Anspruch 1 und 2, dadurch gekennzeichnet, daß das die Holme (5, 8, 9) und/oder Bügel (20, 26) des Wagenchassis bildende Hohlprofilmaterial an seinem Außenumfang wenigstens eine, vorzugsweise zwei und einander gegenüberliegend angeordnete Längsnuten (39) für die Aufnahme von Leisten aus einem Gummi-oder Kunststoffmaterial aufweist.

4. Schubgepäckwagen nach Anspruch 1 bis 3, dadurch gekennzeichnet, daß das den Lasttragrahmen (1) mit der Lenkrollenaufhängung (13) verbindende, räumlich gestaltete Knotenformteil (11) in der Stirnansicht eine im Wesentlichen T-förmige Gestalt aufweist, wobei der Querbalken der T-Form durch einen untenliegend angeordneten Querträger (10) und der Längsbalken der T-Form durch einen zentral angeordneten, aufragenden Mittelbock (14) gebildet ist.

5. Schubgepäckwagen nach Anspruch 1 bis 4, dadurch gekennzeichnet, daß an den freien außenliegenden Enden des Querträgers (10) des den Lasttragrahmen (1) mit der Lenkrollenaufhängung (13) verbindenden Knotenformteiles (11) einerseits Aufnahmen zum Anschluß von Kippsicherungs-Hilfsrollen und andererseits Aufnahmen für die Verbindung mit dem Lasttragrahmen angeordnet bzw. ausgebildet sind und daß an dem Querträger (10) ein in Vorwärtsfahrtrichtung nach vorne vorspringendes Stoßabweisteil (36) ausgebildet und mit insbesondere nutartigen Aufnahmen (37) zur Anordnung von Leisten oder sonstigen Teilen aus stoßdämpfendem elastischen Material ausgestattet ist.

6. Schubgepäckwagen nach Anspruch 1 bis 5, dadurch gekennzeichnet, daß im oberen Bereich des Mittelbockes (14) des den Lasttragrahmen (1) mit der Lenkrollenaufhängung (13) verbindenden Knotenformteiles (11) Aufnahmen (19) zum wahlweisen Anschluß entweder von innerhalb der Lasttragfläche des Wagens anzuordnenden Lastauflagerstäben (18) oder eines Ladeflächenbegrenzungsbügels (20) ausgebildet bzw. angeordnet sind.

7. Schubgepäckwagen nach Anspruch 1 bis 6, dadurch gekennzeichnet, daß die den Lasttragrahmen (1) mit den Bockrollen (4) und den den Schiebebügel (6) tragenden, aufragenden Holmen (5) verbindenden, räumlich gestalteten Knotenformteile (21) im wesentlichen L-förmig gestaltet sind, wobei an den im wesentlichen vertikal angeordneten Schenkel (22) der L-Form eine Anschlußaufnahme für den den einen Längsholm (8 oder 9) des Lasttragrahmens (1) und an dem im wesentlichen horizontal ausgerichteten Schenkel der L-Form mit einem Abstand zueinander und im wesentlichen vertikal ausgerichtet eine erste Anschlußaufnahme für den hinteren Gepäckanlagebügel (26) und eine zweite Anschlußaufnahme für einen der beiden aufragenden, den Schiebebügel (6) tragenden Holme (5) angeordnet sind, und dessen beide Schenkel innenseitig durch eine bogenförmig gekrümmte Anlagefläche (29) für den Anschluß der Bockrollenlagerung (30) verbunden sind.

8. Schubgepäckwagen nach Anspruch 1 bis 7, dadurch gekennzeichnet, daß die an die den Lasttragrahmen (1) mit dem hinteren Gepäckanlagebügel (26) und den aufragenden, den Schiebebügel (6) tragenden, Holmen (5) verbindenden, räumlich gestalteten Knotenformteile (21) anschließbare Bockrollenlagerung (30) als vormontierbare Baueinheit ausgebildet ist und neben der Lagerachse für die Bockrollen (4) diesen gegenüber mit einem geringen Abstand vorlaufend, ihrerseits um feste Achsen rotierende Hilfsrollen sowie eine nach Art von Schutzblechen ausgebildete Abdeckung der Bockrollen und eine Bremse enthält.

9. Schubgepäckwagen nach Anspruch 1 bis 8, dadurch gekennzeichnet, daß der aus einem einteiligen Hohlprofilmaterialzuschnitt bestehende hintere Gebäckanlagebügel (26) eine nach unten offene U-förmige Grundrißform besitzt und in einem Abstand zu seinem Anschluß an die hinteren Knotenformteile (21) gegen die aufragenden Holme (5) abgestützt ist, wobei die Abstützung durch formschlüssig mit den längsverlaufenden Längsnuten im Hohlprofilmaterial im Eingriff stehende Stützteile (31) gebildet ist und wobei die Stützteile (31) zugleich mit quergerichteten Anschlußaufnahmen für die gegenebenenfalls vorhandenen Lastauflagerstäbe (18) des Wagenchassis ausgestattet sind.

10. Schubgepäckwagen nach Anspruch 1 bis 9, dadurch gekennzeichnet, daß der im Austausch gegen innerhalb des Lasttragrahmens (1) anzuordnende Lastauflagerstäbe (18) an das Knotenformteil (11) anschließbare vordere Gepäckanlagebügel (20) durch einen einteiligen im Wesentlichen U-förmig verformten und mit angeformten seitlichen Ausladungen versehenen Hohlprofilmaterialabschnitt gebildet ist und daß die dem vorderen Gepäckanlagebügel (20) zugeordneten Aufnahmen im Mittelbock (14) des den Lasttragrahmen (1) mit der Lenkrollenaufhängung (13) verbindenden Knotenformteiles (11) hülsenförmig ausgebildet sind.

11. Schubgepäckwagen nach Anspruch 1 bis 10, dadurch gekennzeichnet, daß die aus Längenabschnitten eines Rundrohrmaterials bestehenden, innerhalb der vom Lasttragrahmen (1) umgrenzten Lasttragfläche und im Wesentlichen in Wagenlängsrichtung verlaufend ausgerichtet angeordneten Lastauflagerstäbe (18), sowohl in der Draufsicht als auch in der Seitenansicht eine etwa L-förmige Gestalt besitzen und einerseits über in dessen oberen Bereich ausgebildete hülsenförmige Aufnahmen am Mittelbock (14) des den Lasttragrahmen (1) mit der Lenkrollenaufhängung (13) verbindenden Knotenformteiles (11) und andererseits über zapfenförmig gestaltete Aufnahmen mit den den hinteren Gepäckanlagebügel gegen die aufragenden Holme (5) abstützenden Stützteilen (31) verbunden sind.

## Claims

1. Luggage trolley, in particular a luggage trolley nestable with identically designed trolleys to form a group of trolleys, for provision at railway stations or airports or similar stopping points of mass transit means, having a rigid load-bearing frame (1), which at least in trolley longitudinal direction delimits a luggage supporting surface arranged inclined counter, to forward travel direction and which is supported on the ground at the front end at least by means of a steering roller (2) pivotal about a vertical axis and at the rear end by means of two fixed rollers (4) rotatable about rigid axles (3), and having a push bar (6), which is carried by and pivotally connected to upwardly projecting struts (5) and spans substantially the entire trolley width, as well as having a braking device acting upon the rear fixed rollers (4) and releasable by means of the push bar (6) pivotally connected to the upwardly projecting struts (5), wherein the chassis of the trolley is formed by at least two three-dimensional shaped junction parts (11, 21) provided with connecting sockets (12, 23, 25, 27) and by a number of portions of hollow section material and the hollow section material portions and the connecting sockets (12, 23, 25, 27) of the shaped junction parts (11, 21) engage positively one into the other and are secured in their position of mutual engagement by means of releasable fastening means,
characterised in
that a trolley chassis, which comprises a front steering roller suspension (13), a load-bearing frame (1), a rear luggage seating bar (26), two upwardly projecting struts (5) for connection of the push bar (6) as well as connections for the fixed roller bearing arrangement (30), is formed by a total of three three-dimensional shaped junction parts (11, 21) and five hollow section material portions, wherein the hollow section material forming the struts (5, 8, 9) and/or bars (20, 26) of the trolley chassis has an outer periphery with a substantially circular profile cross section and an inside width (34) with a square profile cross section, and that the peg-shaped connecting sockets (12, 23, 25, 27) formed on the shaped junction parts (11, 21) have a square cross-sectional shape corresponding to the inside width (34) of the profile cross section of the hollow section material and are equipped with bases (35), which at least in the region of their end have a cross-sectional shape corresponding to the cross-sectional shape of the outer periphery (33) of the hollow section material.

2. Luggage trolley according to claim 1, characterised in that the load-bearing frame (1) comprises two hollow section material portions, which are bent into an L-shape and are in positive engagement at the front end with connecting sockets (12) of a three-dimensional shaped junction part (11) simultaneously comprising the steering roller suspension (13) and at the rear end with the connecting socket of, in each case, a three-dimensional shaped junction part (21) equipped with means of connecting the fixed roller bearing arrangement (30).

3. Luggage trolley according to claim 1 and 2, characterised in that the hollow section material forming the struts (5, 8, 9) and/or bars (20, 26) of the trolley chassis has at its outer periphery at least one, preferably two mutually opposing longitudinal grooves (39) for receiving strips made of a rubber or plastic material.

4. Luggage trolley according to claim 1 to 3, characterised in that the three-dimensional shaped junction part (11), which connects the load-bearing frame (1) to the steering roller suspension (13), has in front view a substantially T-shaped configuration, wherein the transverse member of the T-shape is formed by a bottom transverse beam (10) and the longitudinal member of the T-shape is formed by a centrally disposed, upwardly projecting middle bearer (14).

5. Luggage trolley according to claim 1 to 4, characterised in that disposed or formed on the free outer ends of the transverse beam (10) of the shaped junction part (11) connecting the load-bearing frame (1) to the steering roller suspension (13) are, on the one hand, sockets for connecting anti-tilting auxiliary rollers and, on the other hand, sockets for the connection to the load-bearing frame and that an impact deflector part (36) projecting forwards in forward travel direction is formed on the transverse beam (10) and equipped with, in particular, groove-like sockets (37) for the arrangement of strips or other parts made of shock-absorbing resilient material.

6. Luggage trolley according to claim 1 to 5, characterised in that formed or disposed in the upper region of the middle bearer (14) of the shaped junction part (11) connecting the load-bearing frame (1) to the steering roller suspension (13) are sockets (19) for the selective connection of either load support rods (18) to be disposed inside the load-bearing area of the trolley or a loading area delimiting bar (20).

7. Luggage trolley according to claim 1 to 6, characterised in that the three-dimensional shaped junction parts (21), which connect the load-bearing frame (1) to the fixed rollers (4) and to the upwardly projecting struts (5) carrying the push bar (6), are substantially L-shaped, wherein disposed on the substantially vertically disposed arm (22) of the L-shape is a connecting socket for the [sic] the one longitudinal strut (8 or 9) of the load-bearing frame (1) and disposed on the substantially horizontally aligned arm of the L-shape, at a distance from one another and substantially vertically aligned, are a first connecting socket for the rear luggage seating bar (26) and a second connecting socket for one of the two upwardly projecting struts (5) carrying the push bar (6), and said two arms are connected at the inside by an arc-shaped contact surface (29) for the connection of the fixed roller bearing arrangement (30).

8. Luggage trolley according to claim 1 to 7, characterised in that the fixed roller bearing arrangement (30) connectable to the three-dimensional shaped junction parts (21), which connect the load-bearing frame (1) to the rear luggage seating bar (26) and to the upwardly projecting struts (5) carrying the push bar (6), takes the form of a structural unit capable of preassembly and comprises, next to the bearing axis for the fixed rollers (4) and a slight distance in front of the latter, auxiliary rollers in turn rotating about fixed axes as well as a cover for the fixed rollers, which is designed in the manner of guard plates, and a brake.

9. Luggage trolley according to claim 1 to 8, characterised in that the rear luggage seating bar (26) comprising an integral hollow section material portion has a downwardly open U-shaped outline shape and is supported, remote from its connection to the rear shaped junction parts (21), against the upwardly projecting struts (5), wherein the support is formed by support parts (31) which are in positive engagement with the longitudinally extending longitudinal grooves in the hollow section material and wherein the support parts (31) are simultaneously equipped with transversely directed connecting sockets for the optionally provided load support rods (18) of the trolley chassis.

10. Luggage trolley according to claim 1 to 9, characterised in that the front luggage seating bar (20), which is connectable to the shaped junction part (11) in exchange for load support rods (18) disposable inside the load-bearing frame (1), is formed by an integral, substantially U-shaped hollow section material portion provided with formed lateral projections and that the sockets, associated with the front luggage seating bar (20), in the middle bearer (14) of the shaped junction part (11) connecting the load-bearing frame (1) to the steering roller suspension (13) are of a sleeve-like design.

11. Luggage trolley according to claim 1 to 10, characterised in that the load support rods (18) comprising lengths of a circular tubular material, which are disposed inside the load-bearing area circumscribed by the load-bearing frame (1) and are aligned substantially in trolley longitudinal direction, both in plan view and also in side view have a substantially L-shaped configuration and are connected, on the one hand, by sleeve-like sockets formed in the upper region of the middle bearer (14) to the shaped junction part (11) connecting the load-bearing frame (1) to the steering roller suspension (13) and, on the other hand, by peg-like sockets to the support parts (31), which support the rear luggage seating bar against the upwardly projecting struts (5).

## Revendications

1. Chariot à bagages, en particulier chariots identiques pouvant être engagés les uns dans les autres pour former une colonne en vue de leur mise à disposition dans des gares, des aéroports ou des dépôts similaires de moyens de transport collectifs, comportant, d'une part, un cadre porteur rigide (1) qui délimite au moins en direction longitudinale la surface de chargement des bagages, inclinée en sens opposé à la direction d'avancement, et qui s'appuie sur le sol à son extrémité avant par au moins une roue de guidage (2) articulée autour d'un axe vertical et à son extrémité arrière par deux roues de support (4) tournant autour d'un axe fixe (3), et d'autre part, une barre de manoeuvre (6) portée par des montants (5) se dressant, sur lesquels elle est articulée, et s'étendant pour l'essentiel sur toute la largeur du chariot, le châssis du chariot étant constitué d'au moins deux pièces façonnées (11), (21) de conception spatiale, formant des noeuds de jonction et pourvues d'éléments de raccord (12), (23), (25), (27), et, d'un certain nombre de découpes de profilé creux qui coopèrent par clabotage avec les pièces (11), (21) formant des noeuds de jonction, leur position d'engagement réciproque étant bloquée par des moyens de fixation amovible, *caractérisé en ce que* le châssis du chariot qui comprend une suspension (13) de la roue avant, un cadre porteur (1) de chargement, un étrier arrière (26) d'appui des bagages, deux montants (5) se dressant pour la barre de manoeuvre (6) et des supports (30) pour le roues de supports, est constitué de trois pièces façonnées (11), (21) de conception spatiale et de cinq découpes de profilé, *en ce que* les profilés formant les montants (5), (8), (9) et/ou les étriers (20), (26) présentent une section transversale de forme extérieure circulaire et de forme intérieure (34) carrée et *en ce que* les éléments de raccord en forme de tenons (12), (23), (25), (27) des pièces (11), (21) formant des noeuds de jonction présentent une section transversale carrée correspondant à la forme intérieure (34) de la section transversale du profilé creux et sont pourvues au moins dans la zone frontale de socles (35) dont la forme de la section transversale correspond à la forme extérieure (33) de la section transversale du profilé creux.

2. Chariot à bagages selon la revendication 1 *caractérisé en ce que* le cadre porteur (1) est constitué de deux découpes de profilé creux repliées en forme de L, dont les extrémités avant coopèrent par clabotage avec des éléments de raccord (12) d'une pièce (11) de conception spatiale, formant un noeud de jonction et intégrant simultanément la suspension (13) de la roue de guidage et dont l'extrémité arrière coopère par clabotage avec une pièce (21) de conception spatiale, formant un noeud de jonction, pourvue des moyens de raccordement du support (30) des roues de supports.

3. Chariot à bagages selon les revendications 1 et 2 *caractérisé en ce que* les profilés creux constituant les montants (5), (8), (9) et/ou les étriers (20), (26) du châssis du chariot comportent dans leur surface périphérique extérieure au moins une, de préférence deux gorges longitudinales (39) disposées l'une en face de l'autre, pour des baguettes en caoutchouc ou en matière synthétique.

4. Chariot à bagages selon les revendications 1 à 3 *caractérisé en ce que* la pièce façonnée (11) de conception spatiale, formant un noeud de jonction, qui relie le cadre porteur (1) à la suspension (13) de la roue de guidage, présente vue de face, sensiblement une forme de T, la barre transversale du T étant constituée d'une traverse (10) située en bas et la barre verticale dudit T étant constituée d'un support médian (14) saillant.

5. Chariot à bagages selon les revendications 1 à 4 *caractérisé en ce que* les extrémités extérieures libres de la traverse (10) de la pièce (11) formant un noeud de jonction qui relie le cadre porteur (1) à la suspension (13) de la roue de guidage, sont disposées ou formées sur, d'une part, des éléments de raccord pour le montage de roues auxiliaires de stabilité au basculement et, d'autre part, des éléments de raccord pour l'assemblage avec le cadre porteur et *en ce que* sur la traverse (10) est disposé un pare-chocs (36) saillant vers l'avant en direction d'avancement du chariot et pourvu de gorges (37) pour le montage de baguettes ou d'autres éléments en matériau élastique amortissant les chocs.

6. Chariot à bagages selon les revendications 1 à 5 *caractérisé en ce que* sur la partie supérieure de la pièce (11) formant un noeud de jonction qui relie le cadre porteur (1) à la suspension (13) de la roue de guidage, sont prévus des éléments de raccord (19) pour le raccordement au choix, soit de barres porteuses (18) disposées à l'intérieur de la surface porteuse du chariot, soit d'un étrier (20) de limitation de la surface de chargement.

7. Chariot à bagages selon l'une des revendications 1 à 6 *caractérisé en ce que* les pièces (21) de conception spatiale formant des noeuds de jonction qui relient le cadre porteur (1) aux roues de support (4) et aux montants (5) se dressant et portant la barre de manoeuvre (6) présentent sensiblement une forme en L dont la branche sensiblement verticale (22) est pourvue d'un élément de raccord destiné à l'un des longerons (8) ou (9) du cadre porteur (1) et dont la branche sensiblement horizontale est pourvue de deux éléments de raccord sensiblement verticaux disposés à une certaine distance l'un de l'autre, l'un des deux éléments de raccord étant destiné à l'étrier arrière (26) d'appui des bagages, l'autre à l'un des montants (5) se dressant et portant la barre de manoeuvre, étant précisé que les deux branches de la pièce (21) sont reliées entre elles par une surface d'appui intérieure (29) courbe, en forme d'arc, destinée au raccord du support (30) des roues de support (4).

8. Chariot à bagages selon les revendications 1 à 7 *caractérisé en ce que* le support (30) des roues de support (4) pouvant être raccordé à la pièce (21) de conception spatiale formant un noeud de jonction qui relie le cadre porteur (1) à l'étrier arrière (26) d'appui des bagages et aux montants (5) se dressant, portant la barre de manoeuvre (6), est constitué d'un sous-ensemble préassemblé comprenant l'axe des roues de support (4), des roues auxiliaires tournant autour d'un axe fixe et disposées à une petite distance devant les roues de support, une protection des roues de support en forme de pare-boue ainsi qu'un frein.

9. Chariot à bagages selon les revendications 1 à 8 *caractérisé en ce que* l'étrier arrière (26) d'appui des bagages, constitué d'une découpe de profilé creux d'une seule pièce, présente une forme en U ouvert vers le bas et s'appuie sur les montants (5) dans une zone située à une certaine distance au-dessus des pièces arrière (21) formant des noeuds de jonction, ledit appui sur les montants (5) étant constitué par des pièces de jonctions (31) qui sont engagées par clabotage dans des gorges longitudinales dans le profilé creux et qui sont équipés d'éléments de raccord perpendiculaires pour les barres porteuses (18) du châssis du chariot.

10. Chariot à bagages selon les revendications 1 à 9 *caractérisé en ce que* l'étier avant (20) d'appui des bagages, qui est raccordé à la pièce (21) formant un noeud de jonction et qui est prévu devant les barres porteuses (18) disposées à l'intérieur de la surface de chargement, est constitué d'une découpe de profilé creux d'une seule pièce, replié sensiblement en forme de U et *en ce que* les éléments des raccord destinés à l'étrier avant (20) d'appui des bagages et prévus dans le support médian (14) de la pièce (11) formant un noeud de jonction et reliant le cadre porteur (1) à la suspension (13) de la roue de guidage, présentent une forme de douille.

11. Chariot à bagages selon les revendications 1 à 10 *caractérisé en ce que* les barres porteuses (18) constituées de découpes longitudinales de tubes creux, disposées à l'intérieur de la surface de chargement du cadre porteur (1) et orientées sensiblement en direction longitudinale du chariot, présentent tant vues de dessus que vues de côté, sensiblement une forme en L et sont reliées, d'une part, par l'intermédiaire d'éléments de raccord en forme de douilles prévus dans la partie supérieure du support médian (14) avec la pièce (11) formant un noeud de jonction et reliant le cadre porteur (1) à la suspension (13) de la roue de guidage, et, d'autre part, par l'intermédiaire d'éléments de raccord en forme de tenons avec les pièces d'appui (31) qui assurent l'assemblage de l'étrier arrière d'appui des bagages et des montants (5).
